# EUROPEAN PATENT APPLICATION

(11) **EP 4 811 213 A1**
(43) Date of publication of application: **23.09.2026**
(21) Application number: 25223458.8
(22) Date of filing: 15.12.2025
(51) Int. Cl.: G06N 3/006, G06N 20/00

(54) **INTELLIGENT ROBOT TRANSACTION SYSTEM AND OPERATING METHOD THEREOF**

(30) Priority: 21.03.2025 TW 114110635
(71) Applicant: Playsee Inc., KY1 -1208 West Bay Grand Cayman (KY)
(72) Inventor: LI, Yu-Hsien, 116 Tapei City (TW)
(74) Representative: Durán-Corretjer, S.L.P.

(57) **Abstract**

An intelligent robot transaction system and operation method thereof. **In** the intelligent robot transaction system, attributes of each of a plurality of intelligent robots are set, machine learning algorithms are used to learn training data for multiple knowledge domains to train multiple intelligent robots in different knowledge domains. Afterwards, through a transaction platform, a user or an enterprise selects an intelligent robot based on the knowledge domain that is needed. The intelligent robot that is selected is imported into a computer system of the user or the enterprise. The computer system operates the intelligent robot having knowledge of a domain to provide corresponding intelligent service.

## Description

### FIELD OF THE INVENTION

The present invention relates to a transaction platform for intelligent robots, and more particularly to an intelligent robot transaction system and an operation method providing a transaction platform that allows users to select from multiple intelligent robots that have been trained and have knowledge in various domains to import the intelligent robot into a user system.

### BACKGROUND OF THE INVENTION

Among the rapidly developing artificial intelligence (AI) domains, one area that is gaining momentum is a general artificial intelligence model that uses large language models (LLMs) to process natural language. This general artificial intelligence model can be used for unspecified tasks, such as general chatbots and AI search engines that provide data retrieval.

For satisfying subsequent needs, special-purpose artificial intelligence models with specific domains of knowledge have also been gradually developed. Compared with general artificial intelligence, special-purpose artificial intelligence mainly provides artificial intelligence for specific domains and uses, such as providing knowledge content in special domains and providing professional solutions for special technologies within the enterprise.

However, to meet the demand for artificial intelligence in specific domains of knowledge, interested individuals or enterprises have to spend huge costs to train the artificial intelligence models that they need. For most enterprises that generally lack artificial intelligence talents, self-training of artificial intelligence models is not a preferred solution.

### SUMMARY OF THE INVENTION

In response to the above-referenced technical inadequacies, the present invention provides an intelligent robot transaction system and an operation method, which allows users to select an intelligent robot that is needed according to requirements, and further allows users to provide training data in specific knowledge domains or professional backgrounds to train the intelligent robot that meet these needs, and then deploys the intelligent robot to a client host to operate the intelligent robot through the intelligent robot transaction system.

According to one embodiment, an intelligent robot transaction system includes a server host including a processing circuit that can execute a program stored on a non-transitory computer-readable storage medium to create an intelligent robot menu. The process for creating the intelligent robot menu includes: setting attributes of each of a plurality of intelligent robots; providing training data created based on the attributes of each of the plurality of intelligent robots, and training one of a plurality of robot models respectively corresponding to the plurality of intelligent robots by using a machine learning algorithm utilizing the training data; deploying the plurality of intelligent robots implemented by the plurality of robot models to a transaction platform; and creating the intelligent robot menu on the transaction platform.

Furthermore, the attributes of any intelligent robot of the plurality of intelligent robots include at least one or any combination thereof. Alternatively, basic data is set for any intelligent robot of the plurality of intelligent robots, and the basic data includes one or any combination of a place of birth, a place of residence, a gender, an age, a religious belief, a language, and an educational background.

Furthermore, the knowledge domain, the professional background, and/or the interests, as well as the basic data of each of the plurality of intelligent robots, are noted in the intelligent robot menu to allow an administrator of an online community to select one or more of the plurality of intelligent robots and deploy the selected one or more intelligent robots to the online community through the intelligent robot transaction system.

Furthermore, the knowledge domain or the professional background of each of the plurality of intelligent robots is noted in the intelligent robot menu to allow a user to select one or more of the plurality of intelligent robots and deploy the selected one or more intelligent robots to a client host through the intelligent robot transaction system.

According to one embodiment, the user can provide training data of the knowledge domain or professional background of one or more intelligent robots to train one or more robot models that meet the need of the user through the intelligent robot transaction system.

Furthermore, the intelligent robot transaction system provides a database, and image data of the plurality of robot models and a simulated image of each of the plurality of intelligent robots provided by the transaction platform to create the intelligent robot menu are stored in the database.

Furthermore, the server host operates a generative artificial intelligence to generate a realistic image of each of the plurality of intelligent robots, and allows the transaction platform to display the realistic image of each of the plurality of intelligent robots in the intelligent robot menu.

According to embodiments of an operating method of an intelligent robot transaction system, the operating method includes: setting attributes of each of a plurality of intelligent robots; providing training data created based on the attributes of each of the plurality of intelligent robots, and training one of a plurality of robot models respectively corresponding to the plurality of intelligent robots by using a machine learning algorithm utilizing the training data; and operating, by the server host based on one or more of the plurality of intelligent robots selected by a user, one or more of the plurality of robot models corresponding to the one or more intelligent robots, and deploying the one or more robot models to a client host through a robot service interface of the server host.

These and other aspects of the present invention will become apparent from the following description of the embodiment taken in conjunction with the following drawings and their captions, although variations and modifications therein may be effected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a schematic diagram of an architecture of an intelligent robot transaction system according to one embodiment of the present invention;
FIG. 2 is a schematic diagram of the intelligent robot transaction system providing an intelligent robot menu according to one embodiment of the present invention;
FIG. 3 is a flowchart of operating the intelligent robot transaction system to create a transaction menu according to one embodiment of the present invention;
FIG. 4 is a flowchart of operating the intelligent robot transaction system to deploy robots to a client host according to one embodiment of the present invention; and
FIG. 5 is a schematic diagram of the intelligent robot transaction system implementing a client host providing robot services according to one embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention provides an intelligent robot transaction system and operating method. Through the collaboration of software and hardware in a computer system, intelligent robots having various knowledge domains, professional backgrounds, specific interests, and even human-like attributes can be trained, and a transaction platform can be created, thereby allowing enterprises or individuals to select intelligent robots based on their needs, deploying the intelligent robots on client hosts, and providing corresponding intelligent services. For example, enterprises can select customer service robots from the transaction platform that match their knowledge domains, such as legal consulting, financial services, or technical customer service, and deploy the customer service robots to their computer systems to provide intelligent customer service. Individuals can select instructors in their areas of interest, such as a fitness trainer, through the transaction platform and receive one-on-one fitness services through the intelligent robot transaction system. Accordingly, even if an enterprise or an individual lacks a powerful computer system, the intelligent robot transaction system provided in the present invention allows them to provide customer service and meet individual needs through the intelligent robot transaction system and without requiring a specially deployed system to handle artificial intelligence computing power.

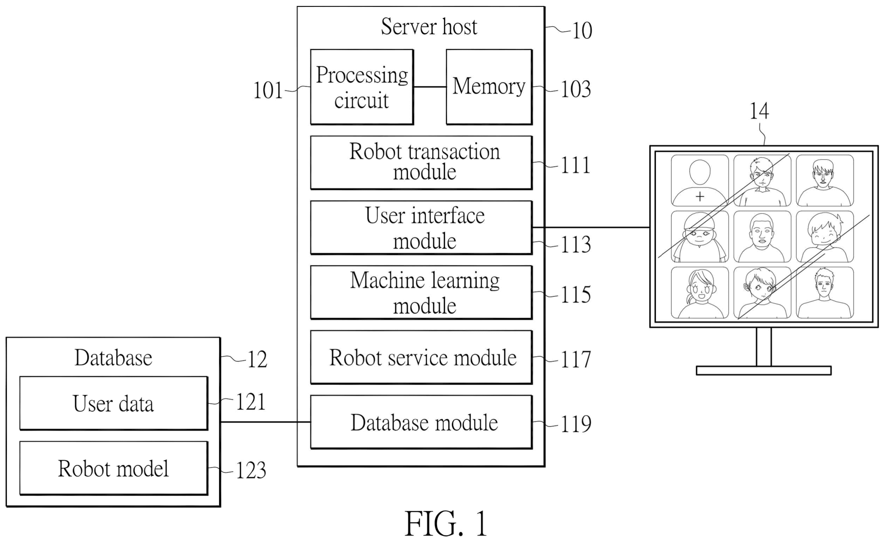

FIG. 1 is a schematic diagram of an architecture of an intelligent robot transaction system according to one embodiment of the present invention.

The intelligent robot transaction system includes a server host 10 implemented as a computer system, and the server host 10 includes basic circuit elements of the computer system such as a processing circuit 101 and a memory 103. Various functions provided by the intelligent robot transaction system are operated through the collaboration of software and hardware. As shown in the figures, the intelligent robot transaction system mainly includes a robot transaction module 111 for creating a transaction platform and providing intelligent robot transaction services, a user interface module 113 for connecting to a user end that provides a user interface for providing an intelligent robot menu, a machine learning module 115 for operating a machine learning algorithm to learn data and train an intelligent robot model, a robot service module 117 for interfacing with a client host to deploy an intelligent robot to the client host and operate intelligent robot services, and a database module 119 for providing database services.

According to one embodiment, the intelligent robot transaction system provides a built-in or an external database 12 that includes user data 121 of customers who access the services of the intelligent robot transaction system, and multiple robot models 123 for providing a transaction platform to create an intelligent robot menu, and the database 12 may include image data of simulated images of each of the intelligent robots.

According to one embodiment, the memory 103 may be implemented by a non-transitory computer-readable storage medium, which stores a program set for operating the intelligent robot transaction system. According to one embodiment, the server host 10 implements the aforementioned modules by executing the program set stored in this non-transitory computer-readable storage medium via the processing circuit 101 (in conjunction with associated software and hardware). The technical objectives set forth in the present invention include training the intelligent robots through executing the program set, creating the intelligent robot menu, and deploying the intelligent robots to the client host based on user selections.

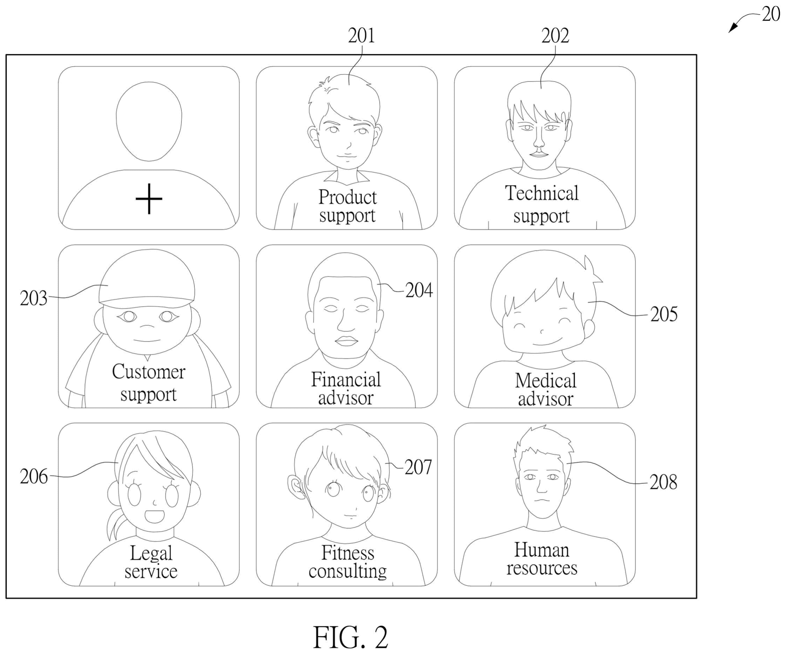

The intelligent robot menu can be referred to in FIG. 2, which is a schematic diagram of the intelligent robot transaction system providing an intelligent robot menu according to one embodiment of the present invention.

According to one embodiment, the transaction platform can be implemented through the intelligent robot transaction system. The transaction platform provides services for browsing, querying, selecting, and deploying intelligent robots through the intelligent robot menu. One implementation manner can refer to a robot transaction selection page 20 listing multiple intelligent robots as shown in the figure, in which intelligent robots having various knowledge domains and professional backgrounds are schematically displayed. In addition, according to one embodiment, the server host 10 in the intelligent robot transaction system can operate generative artificial intelligence to generate realistic images of each of the plurality of intelligent robots. In this way, realistic images of various intelligent robots can be displayed through the intelligent robot menu of the transaction platform.

The robot transaction selection page 20 displayed in this example lists a product support robot 201 having product support expertise, a technical support robot 202 having technical support expertise, a customer service robot 203 having customer technical support service capabilities, a financial advisor robot 204 having financial expertise to serve as an enterprise or personal financial advisor, a medical advisor robot 205 having a medical background to serve as an enterprise or personal medical advisor, a legal service robot 206 having legal expertise that can provide legal consulting services, a fitness consulting robot 207 having fitness expertise, and a human resources robot 208 that can assist enterprises in human resources business, etc.

It should be noted that, the intelligent robot transaction system uses machine learning algorithms to learn the characteristics of training data from various knowledge domains, professional backgrounds, and/or interests, thereby training intelligent robots to have specific attributes. According to one embodiment, a domain-specific language model (DSLM) artificial intelligence technology can be used. DSLMs can generate data based on background knowledge in a specific domain or industry for application to various learning algorithms, so as to enable the trained intelligent robots to understand and respond to content in that specific domain. For example, law, finance, medicine, and science have different domains of knowledge and therefore require corresponding training data. Through DSLMs, such data can be generated, and the data can then be used to train the corresponding intelligent robots.

The attributes of any of the various intelligent robots listed above include at least one or any combination of the knowledge domain, professional background, and interests of the intelligent robot. However, each domain or interest has its own unique characteristics. If the intelligent robots provided by the transaction platform do not meet a predefined set of user requirements of the user, or if an enterprise or individual user wishes to train an intelligent robot to meet their needs, they can submit training data for the relevant domain. The relevant training data are used to train an intelligent robot that meets their needs by using the computing power of the intelligent robot transaction system. Furthermore, if an intelligent robot trained by an enterprise or individual user also possesses attributes related to a specific domain of knowledge, professional background, or interest, the intelligent robot can be deployed on the transaction platform for other users to select and utilize according to their needs, so as to implement a transaction platform for sharing intelligent robots. Various rules, including pricing, licensing methods, and usage rules can be designed for the transaction platform, and will not be described in detailed here.

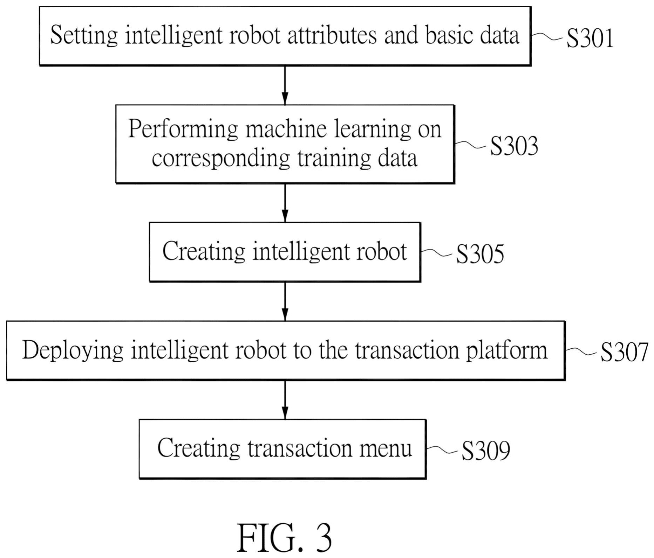

FIG. 3 is a flowchart of operating the intelligent robot transaction system to create a transaction menu according to one embodiment of the present invention.

First, in order to establish intelligent robots having various knowledge domains, professional backgrounds, or interests, multiple attributes of the intelligent robot are set or basic data is added. The intelligent robot attributes include at least one or any combination of the knowledge domains, professional backgrounds, and interests of the intelligent robot. It should be noted that, based on the provided training data, an intelligent robot having various knowledge domains, professional backgrounds, or interests can still be trained (step S301).

According to embodiments of the present invention, basic data for intelligent robots can be configured to not only possess the aforementioned attributes, but also possess human-like characteristics. For example, basic data for one or more specific intelligent robots can be configured to include one or any combination of a place of birth, a place of residence, a gender, an age, a religious belief, a language, and an educational background.

When the above-mentioned attributes are set or the basic data is added, training data based on the individual attributes (or the basic data) of the plurality of intelligent robots can then be provided to the intelligent robot transaction system. Through the machine learning module 115 in the server host 10 of FIG. 1, the processing circuit is driven to cooperate with the software and hardware to execute the machine learning algorithm, so as to use the training data to train the robot model corresponding to each of the intelligent robots (step S303) to create multiple intelligent robots (step S305).

According to one embodiment, during the process of training a robot model, the training data can be divided into a training dataset for training the robot model by using a machine learning algorithm, and a test dataset for testing the effectiveness of the robot model. During the process, a verification dataset can further be separated to verify and optimize the robot model.

Next, after the robot models corresponding to each of the intelligent robots are trained, the robot models can be stored in the database 12 through the database module 119 in the server host 10 as shown in FIG. 1. The server host 10 can also obtain the robot model from the database 12 to deploy the robot model to the transaction platform (step S307) and create the intelligent robot menu. Through the robot transaction module 111 in the server host 10 as shown in FIG. 1, the intelligent robot menu can provide a transaction menu for all parties to select, exchange, authorize use, and share (step S309).

Furthermore, through the intelligent robot menu displayed in a user interface initiated via the user interface module 113 in the server host 10 shown in FIG. 1, a user (an enterprise, an individual, or any entity) can select one or more intelligent robots from the intelligent robot menu and deploy the corresponding one or more robot models to the client host. According to one embodiment, in addition to directly operating intelligent robots on the client host, the client host can also connect to the server host of the intelligent robot transaction system and operate one or more intelligent robots deployed on the client host via a robot service interface provided by the robot service module 117 in the server host 10.

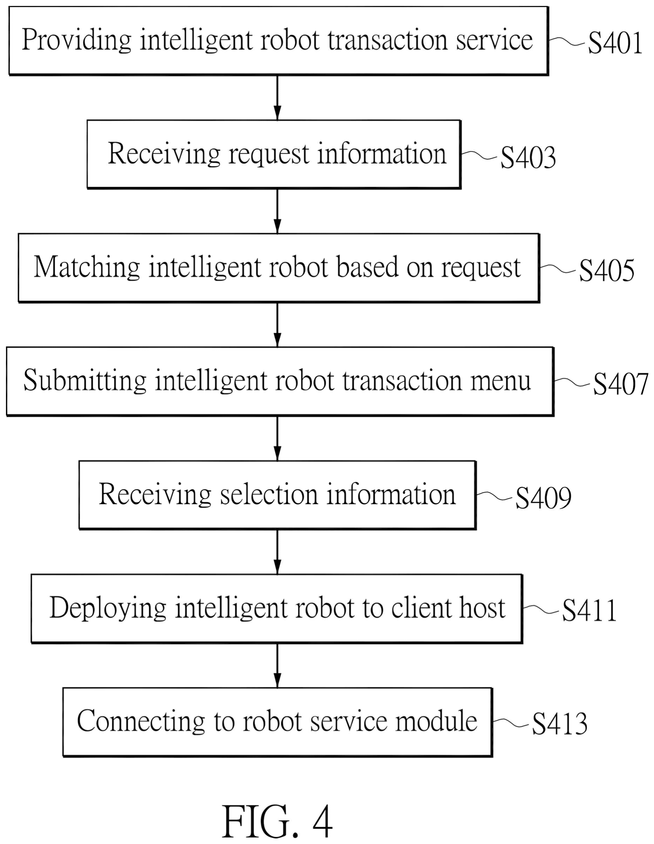

After the intelligent robot is deployed to the transaction platform through the above process, the intelligent robot can be further deployed to the client host by the choice of the user. For the relevant embodiment process, reference can be made to the flowchart for the embodiment as shown in FIG. 4.

The intelligent robot transaction system implements a transaction platform that provides an intelligent robot menu and an intelligent robot transaction service via a webpage or a specific user interface (step S401) for allowing users to browse, search, and select. When a user submits a request to the intelligent robot transaction system, the intelligent robot transaction system receives request information (step S403), matches an intelligent robot based on the request (step S405), and submits the intelligent robot transaction menu generated based on the request (step S407).

After the user selects one or more intelligent robots, the intelligent robot transaction system receives selection information (step S409), obtains the robot model, and deploys the robot model to the client host (step S411). According to one embodiment, the client host then connects to the robot service module of the intelligent robot transaction system, thereby enabling the intelligent robot transaction system to operate the intelligent robot deployed on the client host through the robot service interface (step S413). The user can be an enterprise (customer service, employee), an online community (social media membership), or an individual (providing home services, personal use).

According to another embodiment, the intelligent robot transaction system allows users (such as an enterprise or an individual) to provide training data for one or more intelligent robots in the knowledge domain or professional background that needs training, based on user requirements. In other words, the computing power and algorithms of the server host within the intelligent robot transaction system are used to train one or more robot models for one or more intelligent robots that meet the user requirements. Furthermore, the intelligent robots that are trained by this manner can still be deployed on the aforementioned transaction platform and be shared with others. Mechanisms for sharing, pricing, trading, and authorizing intelligent robots can also be designed in the transaction platform.

In one embodiment, as shown in FIG. 2, the plurality of intelligent robots listed on the robot transaction selection page 20 may have specific images. Generative artificial intelligence technology is used to generate a realistic image of each of the intelligent robots based on the basic data and attributes set for each of the intelligent robots. The simulated images of each of the intelligent robots are then displayed by the transaction platform in the intelligent robot menu. In addition to the robot models, the database also stores image data for the simulated images of each of the intelligent robots.

According to one embodiment, the image data for the intelligent robots is generated by using generative artificial intelligence based on 3D rendering technology to generate realistic images of the intelligent robot into a humanoid or a specific object. If applied in online communities, the intelligent robot transaction system can use generative artificial intelligence to generate unique realistic images for each of the intelligent robots. The images displayed on online community applications can be realistic images of intelligent robots taking shapes of humans, animals, or various objects. These simulated intelligent robot images can have different appearances, can produce learned sounds, and can possess domain-specific knowledge, thereby allowing users to selectively perform interaction with the community based on requirements.

Accordingly, in another embodiment, the intelligent robot has realistic images and can be deployed in the online communities to become a user having artificial intelligence. Online communities include various social media, chat rooms, video sharing platforms, and personal content channels. Relevant administrators can select the intelligent robots to be deployed to the online communities on the transaction platform, obtain the robot model and image data from the database for being operated in the online communities.

It should be noted that, since each of the intelligent robots has basic data, such as a place of birth, a place of residence, a gender, an age, a religious belief, a language, and an educational background that are set like a real person, as well as having attributes such as specific knowledge domains, professional backgrounds, or interests, the intelligent robot can act in online communities like a real person.

For example, if an intelligent robot deployed to a client host of an enterprise possesses human resources expertise, the intelligent robot can assist the enterprise in identifying suitable talents and proposing regulatory compliance policies. Furthermore, the enterprise can also introduce data of the enterprise to train the intelligent robot, or train the intelligent robot through the intelligent robot transaction system to better meet the requirements of the enterprise. Intelligent robots with business capabilities can assist enterprises in business promotion, adjust parameters based on the requirements of the enterprise, or be trained into specialized sales representatives based on specialized data to effectively achieve performance goals of the enterprise.

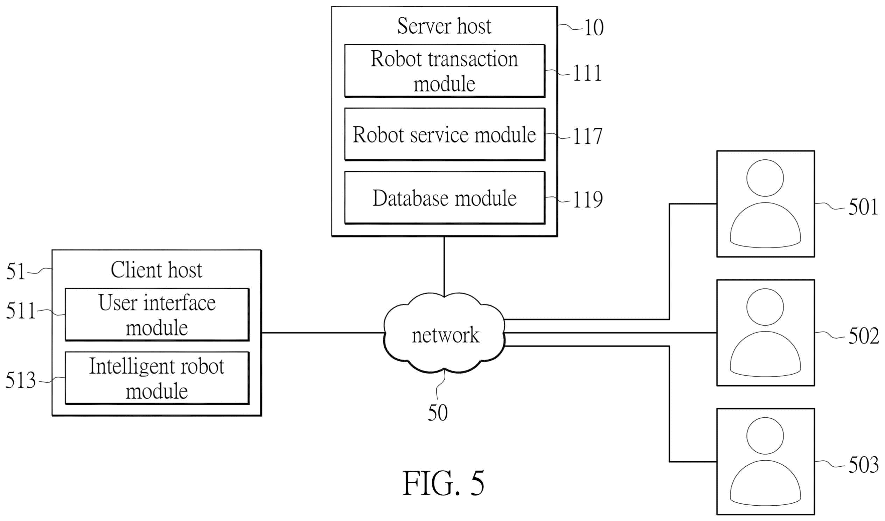

Based on the above embodiments of training and deploying the intelligent robots through the intelligent robot transaction system, FIG. 5 then shows a schematic diagram of the intelligent robot transaction system implementing a client host providing robot services according to one embodiment of the present invention.

This diagram illustrates the server host 10, a client host 51, and end users of the intelligent robot transaction system all connected to each other via a network 50 to access services. Main components within the server host 10 include the robot transaction module 111 that provides intelligent robot transaction services, the robot service module 117 that provides services for operating intelligent robots deployed on the client host 51, and the database module 119 that interfaces with the database.

Furthermore, the figure shows an intelligent robot including an intelligent robot module 513 storing a robot model or image data of the intelligent robot being deployed on the client host 51, and a user interface module 511 providing end-user access to intelligent robot services. For example, an enterprise can allow its employees or customers to access the services provided by the intelligent robot deployed on the client host 51 through a user interface initiated by the user interface module 511 and by using computer devices such as a first terminal device 501, a second terminal device 502, and a third terminal device 503 as shown in the figure.

In summary, according to the intelligent robot transaction system and the operating method described in the above embodiments, the intelligent robot transaction system trains multiple intelligent robots having attributes in various knowledge domains. These intelligent robots are then deployed to a transaction platform, allowing individual or enterprise users to select an intelligent robot based on the desired knowledge domain. The robots can then be deployed to client hosts for operation. Furthermore, individuals or enterprises can provide their own training data in specific knowledge domains to the intelligent robot transaction system, thereby training intelligent robots that meet specific needs. This data can then be imported into the computer systems of the individual or enterprise users, thereby providing intelligent robot services having specific domain knowledge.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. An intelligent robot transaction system, **characterized by** comprising:
a server host (10) including a processing circuit (101), wherein the processing circuit (101) executes a program set stored in a non-transitory computer-readable storage medium to create an intelligent robot menu, and wherein a process of creating the intelligent robot menu includes:
setting attributes of each of a plurality of intelligent robots;
providing training data created based on the attributes of each of the plurality of intelligent robots, and training one of a plurality of robot models (123) respectively corresponding to the plurality of intelligent robots by using a machine learning algorithm utilizing the training data;
deploying the plurality of intelligent robots implemented by the plurality of robot models (123) to a transaction platform; and
creating the intelligent robot menu on the transaction platform.

2. The intelligent robot transaction system according to claim 1, wherein the attributes of any intelligent robot of the plurality of intelligent robots include at least one or any combination of a knowledge domain, a professional background, and an interest.

3. The intelligent robot transaction system according to claim 2, wherein basic data is set for any intelligent robot of the plurality of intelligent robots, and the basic data includes one or any combination of a place of birth, a place of residence, a gender, an age, a religious belief, a language, and an educational background.

4. The intelligent robot transaction system according to claim 3, wherein the knowledge domain, the professional background, and/or the interest, and the basic data of each of the plurality of intelligent robots are noted in the intelligent robot menu to allow an administrator of an online community to select one or more of the plurality of intelligent robots and deploy the selected one or more intelligent robots to the online community through the intelligent robot transaction system.

5. The intelligent robot transaction system according to claim 2, wherein the knowledge domain or the professional background of each of the plurality of intelligent robots is noted in the intelligent robot menu to allow a user to select one or more of the plurality of intelligent robots and deploy the selected one or more intelligent robots to a client host (51) through the intelligent robot transaction system.

6. The intelligent robot transaction system according to claim 5, wherein the user provides training data on the knowledge domain or the professional background of the one or more intelligent robots to train one or more robot models (123) of the one or more intelligent robots that meet a predefined set of user requirements of the user through the intelligent robot transaction system.

7. The intelligent robot transaction system according to any one of claims 1 to 6, wherein a database (12) is provided, and image data of the plurality of robot models (123) and a simulated image of each of the plurality of intelligent robots provided by the transaction platform to create the intelligent robot menu are stored in the database (12).

8. The intelligent robot transaction system according to claim 7, wherein the server host (10) operates a generative artificial intelligence to generate a realistic image of each of the plurality of intelligent robots, and allows the transaction platform to display the realistic image of each of the plurality of intelligent robots in the intelligent robot menu.

9. An operating method of an intelligent robot transaction system, **characterized in that**, the operating method is executed in a server host (10), and the operating method includes:
setting attributes of each of a plurality of intelligent robots;
providing training data created based on the attributes of each of the plurality of intelligent robots, and training one of a plurality of robot models (123) respectively corresponding to the plurality of intelligent robots by using a machine learning algorithm utilizing the training data; and
operating, by the server host (10) based on one or more of the plurality of intelligent robots selected by a user, one or more of the plurality of robot models (123) corresponding to the one or more intelligent robots, and deploying the one or more robot models (123) to a client host (51) through a robot service interface of the server host (10).

10. The operating method according to claim 9, wherein, after training the plurality of robot models (123) corresponding to each of the plurality of intelligent robots, the server host (10) deploys the plurality of intelligent robots implemented by the plurality of robot models (123) to a transaction platform and creates an intelligent robot menu.

11. The operating method according to claim 10, wherein the intelligent robot menu allows the user to select one or more of the plurality of intelligent robots, and deploys the one or more intelligent robots selected by the user to the client host (51); wherein the client host (51) is connected to the server host (10), and operates the one or more intelligent robots via the robot service interface.

12. The operating method according to claim 9, wherein the attributes of any intelligent robot of the plurality of intelligent robots include at least one or any combination of a knowledge domain, a professional background, and an interest.

13. The operating method according to claim 12, wherein the user provides training data on the knowledge domain or the professional background of the one or more intelligent robots to train one or more robot models (123) of the one or more intelligent robots that meet a predefined set of user requirements through the intelligent robot transaction system.

14. The operating method according to any one of claims 10 to 13, wherein the server host (10) provides a database (12), and image data of the plurality of robot models (123) and a simulated image of each of the plurality of intelligent robots provided by the transaction platform to create the intelligent robot menu are stored in the database (12).

15. The operating method according to claim 14, wherein the server host (10) operates a generative artificial intelligence to generate a realistic image of each of the plurality of intelligent robots, and allows the transaction platform to display the realistic image of each of the plurality of intelligent robots in the intelligent robot menu.
